# EUROPÄISCHE PATENTANMELDUNG

(11) **EP 0 846 586 A2**
(43) Veröffentlichungstag der Anmeldung: **10.06.1998**
(21) Anmeldenummer: 97120429.2
(22) Anmeldetag: 21.11.1997
(51) Int. Cl.: B60K 15/077

(54) **In einem Kraftstoffbehälter eines Kraftfahrzeuges anzuordnender Schwalltopf**

(30) Priorität: 04.12.1996 DE 19650244
(71) Anmelder: Mannesmann VDO Aktiengesellschaft, 60388 Frankfurt/M. (DE)
(72) Erfinder: Hein, Michael, 63150 Heusenstamm (DE)
(74) Vertreter: Rassler, Andrea, Dipl.-Phys.

(57) **Zusammenfassung**

Ein zur Montage in einem Kraftstoffbehälter (1) vorgesehener Schwalltopf (2) hat eine Wandung (12) mit einem umlaufenden gummielastischen Einsatz (14). Hierdurch hat der Schwalltopf (2) in einer Montagestellung einen kleinen Querschnitt, mit dem er sich durch eine Montageöffnung (3) des Kraftstoffbehälters (1) hindurchführen lässt. Nach der Montage wird der gummielastische Einsatz (14) nach außen gedrückt, so dass der Schwalltopf (2) ein besonders großes Volumen an Kraftstoff aufnehmen kann.

## Beschreibung

Die Erfindung betrifft einen in einem Kraftfstoffbehälter eines Kraftfahrzeuges anzuordnenden Schwalltopf, welcher zur Durchführung durch eine Montageöffnung in dem Kraftstoffbehälter vorgesehen ist und einen Behälterboden und eine seitliche Wandung hat.

Solche Schwalltöpfe werden in heutigen Kraftfahrzeugen zum Sammeln von Kraftstoff aus einem nahezu leeren Kraftstoffbehälter eingesetzt. Hierdurch stellt der Schwalltopf beispielsweise bei Kurven- oder Bergfahrten des Kraftfahrzeuges eine ausreichende Versorgung einer Brennkraftmaschine des Kraftfahrzeuges mit Kraftstoff sicher. Der Schwalltopf wird in der Regel durch eine in der Oberseite des Kraftstoffbehälters angeordnete Montageöffnung eingeführt und zur Befestigung im Kraftstoffbehälter in der Regel gegen den Boden des Kraftstoffbehälters vorgespannt. Hierdurch gestaltet sich die Montage der Fördereinheit mit dem Schwalltopf besonders einfach.

Heutige Kraftfahrzeuge erfordern einen Schwalltopf mit einem besonders großen Volumen, da eine kurzzeitige Unterbrechung der Kraftstoffversorgung beispielsweise Beschädigungen an einem Abgaskatalysator hervorrufen kann und deshalb zuverlässig vermieden werden muss. Weiterhin werden in dem Schwalltopf beispielsweise eine Kraftstoffpumpe und andere Bauteile einer Kraftstofffördereinrichtung für die Brennkraftmaschine angeordnet, die jedoch das Volumen des Schwalltopfes einschränken.

Man könnte daran denken, die Abmessungen des Schwalltopfes zu vergrößern. Dies erfordert jedoch eine entsprechend große Montageöffnung in der Oberseite des Kraftstoffbehälters. Eine große Montageöffnung muss jedoch zur Vermeidung eines Ausgasens von Kraftstoff aufwendig abgedichtet werden. Weiterhin sind die Kraftstoffbehälter heutiger Kraftfahrzeuge häufig sehr verwinkelt gebaut, so dass sich die Montageöffnung nicht beliebig vergrößern lässt.

Der Erfindung liegt das Problem zugrunde, einen Schwalltopf der eingangs genannten Art so zu gestalten, dass er ein möglichst großes Volumen aufweist und möglichst kleine Montageöffnungen in der Oberseite des Kraftstoffbehälters erfordert.

Dieses Problem wird erfindungsgemäß dadurch gelöst, dass der Schwalltopf von einer Montagestellung mit einem zur Durchführung durch die Montageöffnung des Kraftstoffbehälters vorgesehenen kleinen Querschnitt in eine Grundstellung mit großem Querschnitt ausgebildet ist.

Durch diese Gestaltung kann der Schwalltopf in der in dem Kraftstoffbehälter montierten Grundstellung ein großes Volumen an Kraftstoff aufnehmen und damit die Sicherheit der Kraftstoffversorgung der Brennkraftmaschine auch bei längeren Kurven- oder Bergfahrten gewährleisten. In Montagestellung weist der Schwalltopf jedoch einen im Vergleich zur Grundstellung kleinen Querschnitt auf und lässt sich damit durch relativ kleine Montageöffnungen in den Kraftstoffbehälter einführen.

Der Schwalltopf ist gemäß einer vorteilhaften Weiterbildung der Erfindung zur Montage in verwinkelten Kraftstoffbehältern geeignet, wenn die Wandung zumindest einen elastischen Einsatz aufweist. Dieser elastische Einsatz kann beispielsweise in Grundstellung nach außen hin gedehnt werden oder nach außen schwenkbare Teile der Wandung gegenüber feststehenden Teilen des Schwalltopfes abdichten.

Der Schwalltopf hat in Grundstellung ein besonders großes Volumen und in Montagestellung einen kleinen Querschnitt, wenn sich der elastische Einsatz um den vollen Umfang des Schwalltopfes erstreckt. Hierdurch hat der Schwalltopf in Montagestellung eine schmale längliche Gestalt. In Grundstellung kann der elastische Einsatz nach außen gedrückt werden. Der Schwalltopf hat anschließend eine bauchige Gestalt.

Der Schwalltopf lässt sich gemäß einer anderen vorteilhaften Weiterbildung der Erfindung kostengünstig fertigen, wenn die seitliche Wandung zumindest eine ebene Wand aufweist, die mit einem Filmscharnier an einer Kante des Behälterbodens in Grundstellung nach außen hin schwenkbar befestigt ist. Die Wand und das Filmscharnier lassen sich beispielsweise einteilig mit den übrigen Bauteilen des Schwalltopfes aus Kunststoff im Spritzgießverfahren fertigen.

Der Schwalltopf hat gemäß einer anderen vorteilhaften Weiterbildung der Erfindung in Grundstellung eine hohe Stabilität, wenn die Wandung einen Faltenbalg mit auf den Behälterboden zulaufenden Falten hat. Der Faltenbalg kann sich um einen Teil oder den vollen Umfang des Schwalltopfes erstrecken oder auch zur Abdichtung einer beweglichen Wand gegenüber feststehenden Teilen des Schwalltopfes eingesetzt werden. Da sich der Faltenbalg einfach einteilig mit den übrigen Teilen des Schwalltopfes aus Kunststoff im Spritzgießverfahren fertigen lässt, führt diese Gestaltung zu einer weiteren Verringerung der Fertigungskosten für den Schwalltopf.

Der Schwalltopf lässt sich gemäß einer anderen vorteilhaften Weiterbildung der Erfindung durch besonders kleine Montageöffnungen hindurchführen, wenn er vollständig aus einem elastischen Material gefertigt ist.

Die Montage des Schwalltopfes gestaltet sich gemäß einer anderen vorteilhaften Weiterbildung der Erfindung besonders einfach, wenn er ein Federelement zu seiner Vorspannung in die Grundstellung aufweist. Durch diese Gestaltung ist keine aufwendige Arretierung des Schwalltopfes in Betriebsstellung erforderlich. Als Federelement könnte beispielsweise eine separat anzuordnende Feder eingesetzt werden. Alternativ dazu könnte der Faltenbalg oder der gummielastische Einsatz den Schwalltopf in die Grundstellung vorspannen.

Die Erfindung lässt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig.1: eine Schnittdarstellung eines in einem Kraftstoffbehälter angeordneten erfindungsgemäßen Schwalltopfes,
- Fig.2: einen Schwalltopf mit einer schwenkbaren seitlichen Wandung,
- Fig.3: einen Schwalltopf mit einem Faltenbalg.

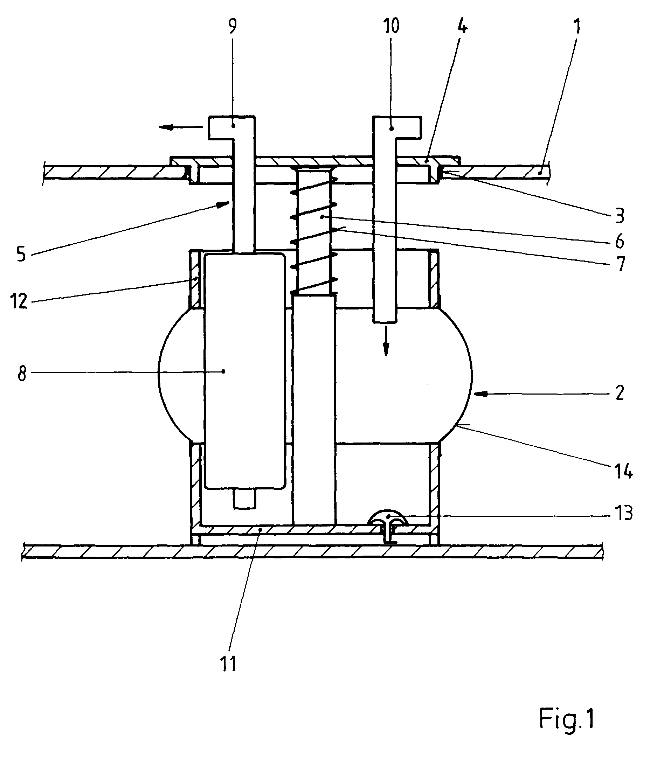

Die Figur 1 zeigt einen in einem Kraftstoffbehälter 1 angeordneten Schwalltopf 2 in einer Grundstellung. Der Kraftstoffbehälter 1 hat an seiner Oberseite eine Montageöffnung 3, die von einem Flansch 4 einer Kraftstofffördereinrichtung 5 verschlossen ist. Zwischen dem Flansch 4 und dem Schwalltopf 2 ist eine Führung 6 mit einer Feder 7 angeordnet, die den Schwalltopf 2 gegen den Boden des Kraftstoffbehälters 1 vorspannt. In dem Schwalltopf 2 ist eine Kraftstoffpumpe 8 angeordnet, die Kraftstoff über eine Vorlaufleitung 9 zu einer nicht dargestellten Brennkraftmaschine des Kraftfahrzeugs fördert. Der Flansch 4 der Kraftstofffördereinrichtung 5 wird von der Vorlaufleitung 9 und einer von der Brennkraftmaschine rückführenden Rücklaufleitung 10 durchdrungen.

Der Schwalltopf 1 hat einen Behälterboden 11 und eine seitliche Wandung 12 und wird über die Rücklaufleitung 10 und ein im Behälterboden 11 angeordnetes Bodenventil 13 mit Kraftstoff gefüllt. Die Wandung 12 hat einen sich um den vollen Umfang erstreckenden elastischen Einsatz 14, der in der eingezeichneten Grundstellung nach außen gedrückt ist. Hierdurch hat der Schwalltopf 2 ein besonders großes Volumen. Will man den Schwalltopf 2 aus dem Kraftstoffbehälter 1 durch die Montageöffnung 3 entnehmen, lässt sich der Schwalltopf 2 einfach in eine schmale längliche Gestalt bringen, mit der er durch die Montageöffnung 3 führbar ist, indem man den elastischen Einsatz 14 nach innen stülpt.

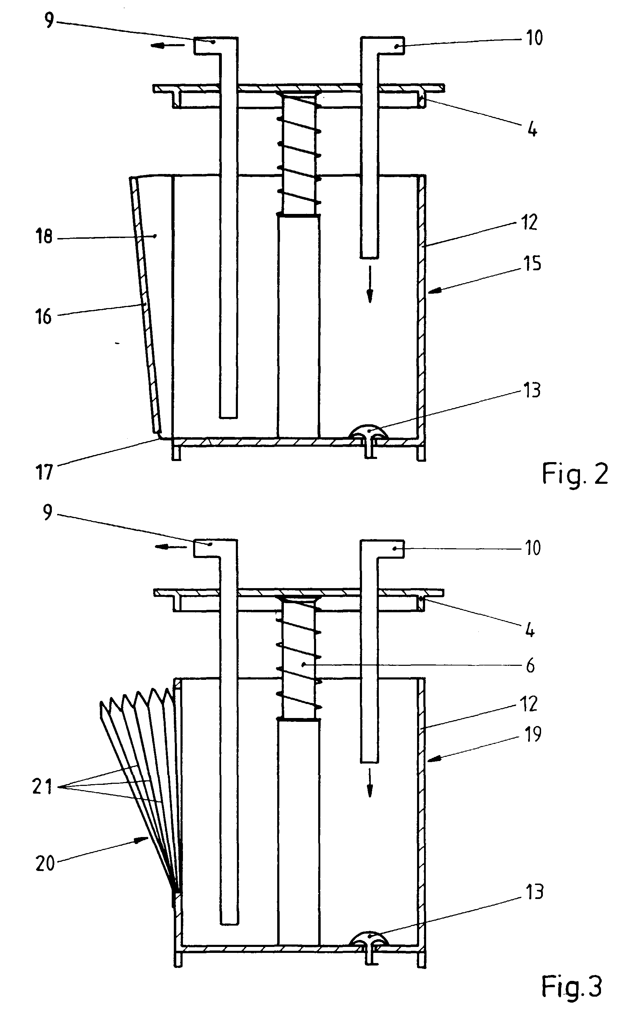

Die Figur 2 zeigt einen Schwalltopf 15 in Grundstellung, bei dem eine ebene Wand 16 seiner seitlichen Wandung 12 mit einem Filmscharnier 17 an einer Kante des Behälterbodens 11 befestigt ist. Die Wand 16 ist durch das Filmscharnier 17 schwenkbar gehalten und mit feststehenden Bereichen der Wandung 12 über einen elastischen Einsatz 18 verbunden. Die Wand 16 wird von dem elastischen Einsatz 18 nach aussen und damit in Grundstellung des Schwalltopfes 15 vorgespannt.

In Figur 3 ist ein Schwalltopf 19 dargestellt, bei dem ein Teil seiner Wandung 12 von einem Faltenbalg 20 mit auf den Behälterboden 11 zulaufenden Falten 21 gebildet ist. Die Wandung 12 des Schwalltopfes 19 lässt sich damit nach einer Montage in dem in Figur 1 dargestellten Kraftstoffbehälter 1 einfach auffächern.

## Patentansprüche

1. In einem Kraftfstoffbehälter eines Kraftfahrzeuges anzuordnender Schwalltopf, welcher zur Durchführung durch eine Montageöffnung in dem Kraftstoffbehälter vorgesehen ist und einen Behälterboden und eine seitliche Wandung hat, **dadurch gekennzeichnet**, dass der Schwalltopf (2, 15, 19) von einer Montagestellung mit einem zur Durchführung durch die Montageöffnung (3) des Kraftstoffbehälters (1) vorgesehenen kleinen Querschnitt in eine Grundstellung mit großem Querschnitt veränderbar ausgebildet ist.

2. Schwalltopf nach Anspruch 1, **dadurch gekennzeichnet**, dass die Wandung (12) zumindest einen elastischen Einsatz (14, 18) aufweist.

3. Schwalltopf nach Anspruch 2, **dadurch gekennzeichnet**, dass sich der elastische Einsatz (14) um den vollen Umfang der Wandung (12) des Schwalltopfes (2) erstreckt.

4. Schwalltopf nach zumindest einem der vorhergehenden Ansprüche, **dadurch gekennzeichnet**, dass die Wandung (12) zumindest eine ebene Wand (16) aufweist, die mit einem Filmscharnier (17) an einer Kante des Behälterbodens (11) in Grundstellung nach außen hin schwenkbar befestigt ist.

5. Schwalltopf nach zumindest einem der vorhergehenden Ansprüche, **dadurch gekennzeichnet**, dass die Wandung (12) einen Faltenbalg (20) mit auf den Behälterboden (11) zulaufenden Falten (21) hat.

6. Schwalltopf nach zumindest einem der vorhergehenden Ansprüche, **dadurch gekennzeichnet**, dass er vollständig aus einem elastischen Material gefertigt ist.

7. Schwalltopf nach zumindest einem der vorhergehenden Ansprüche, **dadurch gekennzeichnet**, dass er ein Federelement (elastischer Einsatz 18) zu seiner Vorspannung in die Grundstellung aufweist.
